# EUROPEAN PATENT APPLICATION

(11) **EP 4 620 812 A1**
(43) Date of publication of application: **24.09.2025**
(21) Application number: 22970020.8
(22) Date of filing: 27.12.2022
(51) Int. Cl.: B64D 1/16, B64C 39/02, B64U 10/13, B64U 101/45

(54) **UNMANNED AERIAL VEHICLE**

(71) Applicant: Kubota Corporation, Osaka 556-8601 (JP)
(72) Inventor: ISHIKAWA, Naohiro, Sakai-shi, Osaka 590-0908 (JP)
(74) Representative: Cabinet Beau de Loménie
(86) International application number: PCT/JP2022/048158
(87) International publication number: WO 2024/142226

(57) **Abstract**

An unmanned aerial vehicle includes a plurality of rotors, a main body supporting the plurality of rotors, a tank that accommodates agricultural materials, and a transport part provided on the tank to transport the agricultural materials toward the tank. The transport part has elasticity and/or flexibility.

## Description

### TECHNICAL FIELD

The present disclosure relates to unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (MultiRotor UAV) is also called a "drone", "multirotor", or "multicopter", and is widely used for applications including aerial photography, surveying, logistics, and agricultural spraying.

In agricultural applications, systems have been developed to supply pesticides or electric power to drones for field application. Patent Document 1 describes such a system. The system includes a base station where drones can land or dock, and a holding tank that stores pesticides.

### CITATION LIST

### PATENT LITERATURE

Patent Document No. 1: Japanese Patent Application Publication No. 2021-75277

### SUMMARY OF INVENTION

### TECHNICAL PROBLEM

There is a need for improved technology to supply liquid agents such as herbicides or insecticides, and fuels from a supply station to an unmanned aerial vehicle.

The present disclosure provides a novel structure for unmanned aerial vehicles that each enable smooth supply of liquid agents such as herbicides or insecticides, and fuels from a supply station to the unmanned aerial vehicle.

### SOLUTION TO PROBLEM

In an exemplary and non-limiting embodiment, an unmanned aerial vehicle of the present disclosure comprises a plurality of rotors, a main body supporting the plurality of rotors, a tank that accommodates agricultural materials, and a transport part provided on the tank to transport the agricultural materials toward the tank, wherein the transport part has elasticity and/or flexibility.

### ADVANTAGEOUS EFFECTS OF INVENTION

According to embodiments of the present disclosure, a novel structure for an unmanned aerial vehicle is provided that enables smooth supply of liquid agents such as herbicides or insecticides, and fuels from a supply station to the unmanned aerial vehicle.

### BRIEF DESCRIPTION OF DRAWINGS

FIG. **1A** is a block diagram schematically showing several examples of rotation drive devices to rotate rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3** is a side view schematically showing one example of a basic configuration of a multicopter equipped with a tank and a transport part.
FIG. **4** is an enlarged view of the connection part between the tank and the transport part.
FIG. **5** is a block diagram showing a basic configuration example of a multicopter equipped with a tank and a transport part.
FIG. **6** is a side view schematically showing another example of a basic configuration of a multicopter equipped with a tank and a transport part.
FIG. **7** is a diagram schematically showing a multicopter connected to a supply station by a transport part.
FIG. **8A** is a schematic diagram showing a multicopter replenishing materials while hovering.
FIG. **8B** is a schematic diagram showing another way a multicopter replenishes materials while hovering.
FIG. **9** is a block diagram showing an example of hardware configuration of a control device.
FIG. **10** is a schematic diagram showing an example where a multicopter, an agricultural machine, a server, and a terminal device are connected via a communication network.

### DESCRIPTION OF EMBODIMENTS

Unmanned aerial vehicles equipped with a plurality of rotors include a rotation drive device to rotate the rotors (hereinafter referred to as "propellers"). Hereinafter, such an unmanned aerial vehicle is referred to as a "multicopter".

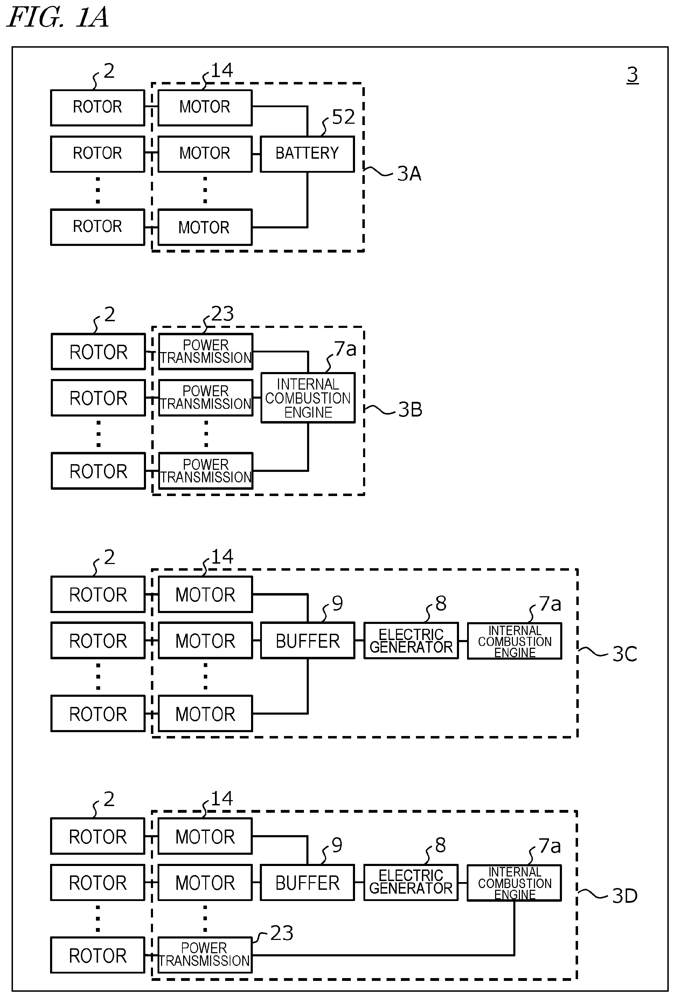

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in a series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, and a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motors **14.** In the fourth rotation drive device **3D,** since mechanical energy generated by internal combustion engine **7a** can be utilized for rotor rotation without conversion to electrical energy, energy utilization efficiency can be enhanced. This type of driver is called "parallel hybrid driver".

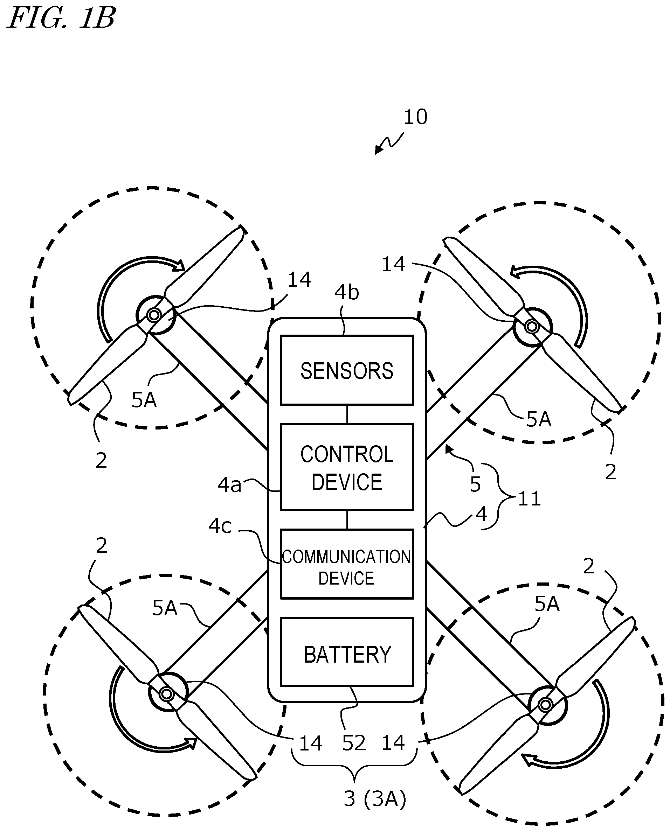

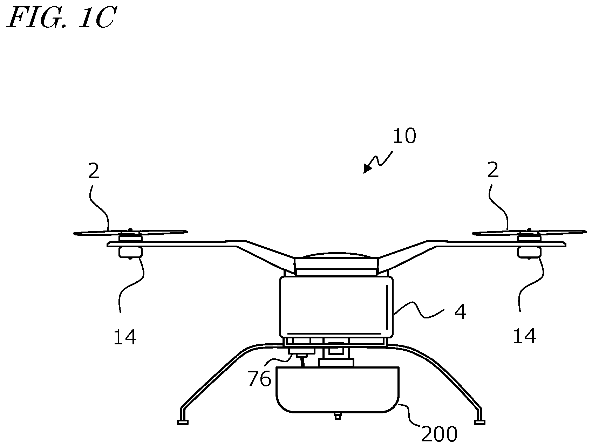

FIG. **1B** is a plan view schematically showing a basic configuration example of multicopter **10.** The configuration example in FIG. **1B** includes the first rotation drive device **3A** shown in FIG. **1A** as rotation drive device **3.** That is, in this example, rotation drive device **3 (3A)** includes motors **14** and a battery **52.** FIG. **1C** is a side view schematically showing the multicopter.

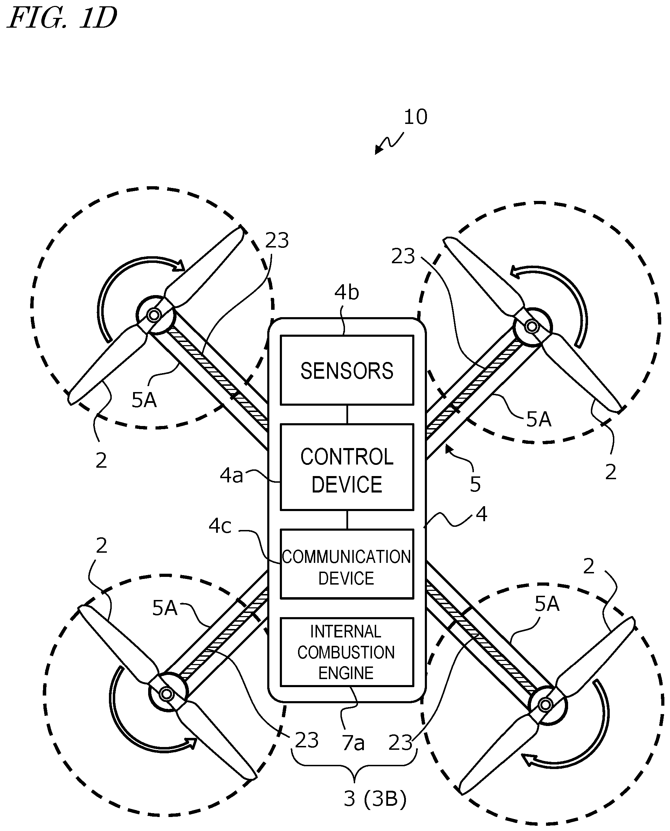

The multicopter **10** shown in FIGS. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably with a plurality of arms **5A** extending outward from the central portion. The motors **14** that rotate rotors **2** are provided near the ends of each arm **5A.**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** to control the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, an angular velocity sensor, a geomagnetic sensor, an atmospheric pressure sensor, an altitude sensor, a temperature sensor, a flow sensor, an imaging device, a laser sensor, an ultrasonic sensor, an obstacle contact sensor, and a GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and 2D or 3D LiDAR.

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute some or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are included, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned more inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** includes a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.**

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used to rotate the main rotors and the motors **14** may be used to rotate the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine **7a** is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine **7a** and uses the internal combustion engine **7a** for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "work machines" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. Additionally, if the implement **200** is equipped with space large enough to store materials, the implement **200** can also transport agricultural materials or harvested crops over a wide area.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of implement **200** may be performed using this power. The implement **200** includes actuators such as motors that operate using power obtained from the power supply **76** of the multicopter **10.** The implement **200** preferably includes a battery for storing power.

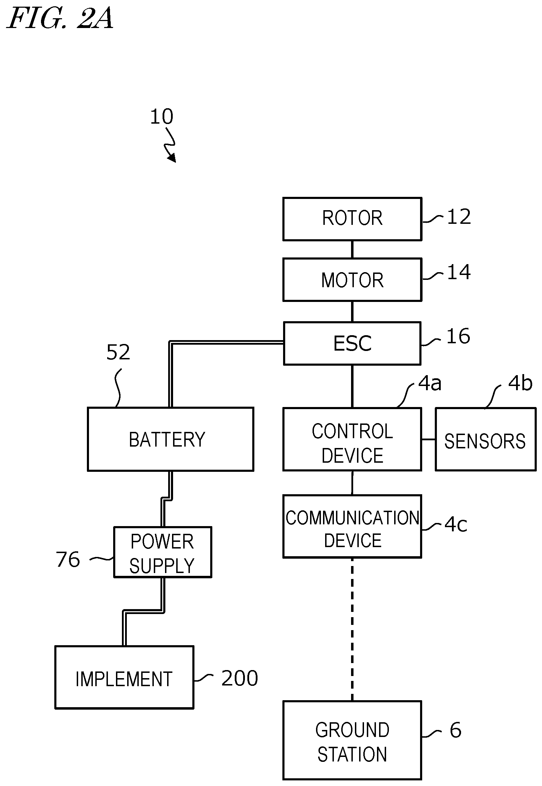

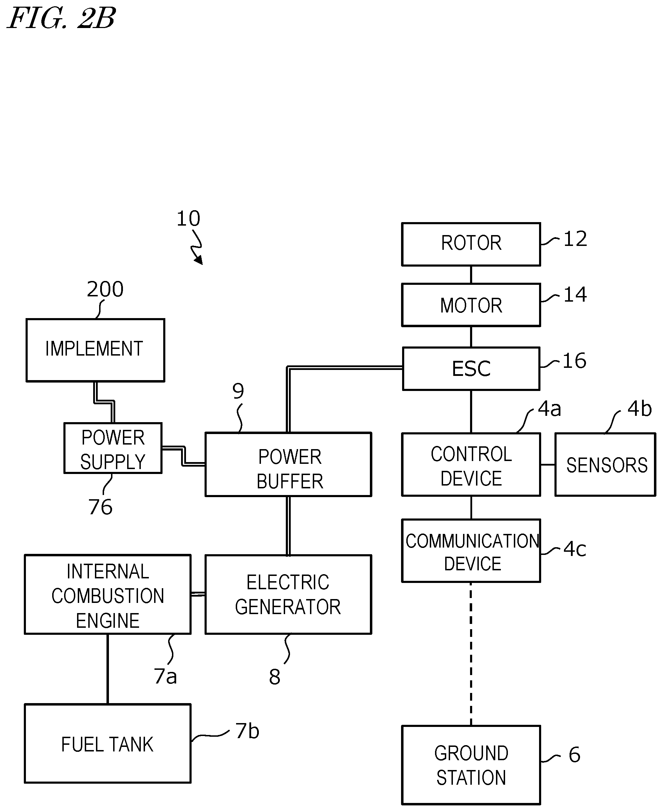

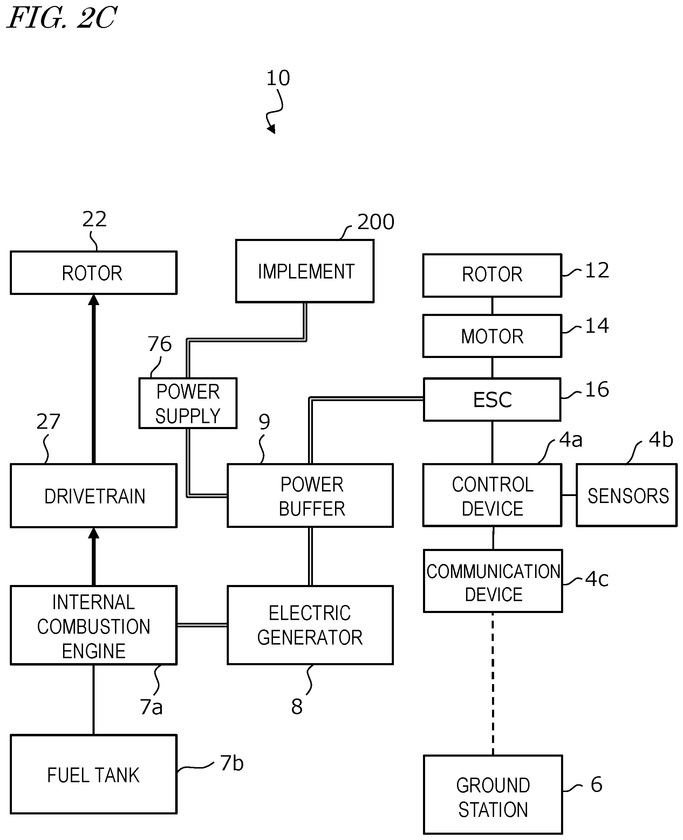

FIG. **2A** is a block diagram showing a basic configuration example of a battery-driven multicopter **10.** The battery-driven multicopter **10** includes a plurality of rotors **12,** a plurality of motors **14** each rotating a respective one of the plurality of rotors **12,** a plurality of ESCs (Electric Speed Controllers) **16** each including a motor drive circuit that drives a respective one of the plurality of motors **14,** a battery **52** that supplies power to each of the motors **14** through respective ESCs **16,** a control device **4a** for controlling a plurality of ESCs **16** to control attitude while flying, sensors **4b,** a communication device **4c,** and a power supply **76** that is electrically connected to the battery **52.** Rotor **12** is an example of rotor **2.** Devices such as the control device **4a,** sensors **4b,** communication device **4c,** etc., may be connected to each other through a CAN (Controller Area Network) bus to enable communication. In FIG. **2A****,** for simplicity, the rotor **12,** the motor **14,** and the ESC **16** are each shown by a single block, but the numbers of rotors **12,** motors **14,** and ESCs **16** are each plural. This also applies to Figs. **2B** and **2C****.** The ESC **16** may be included in the control device **4a.**

The control device **4a** may receive control commands wirelessly from, for example, a ground station **6** on the ground through the communication device **4c.** The number of ground stations **6** is not limited to one, and they may be distributed across multiple locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.**

The control device **4a** may be configured to communicate with the implement **200** connected to power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and rotor **22** to rotate upon the receiving driving force from the internal combustion engine **7a** through the drivetrain **27.** Rotor **22** is an example of rotor **2.** The number of rotors **22** connected to the drivetrain **27** and rotated may be one or two or more.

In the parallel hybrid drive type multicopter **10,** the internal combustion engine **7a** not only drives the electric generator **8** to generate power but also mechanically transmits energy to rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** if the electric generator **8** is, for example, a fuel cell, then the internal combustion engine **7a** is not an essential component.

The multicopters according to embodiments of the present disclosure may further include a tank for accommodating agricultural materials and a transport part provided on the tank to transport agricultural materials toward the tank. The transport part may be, for example, a flexible tube or flexible hose. For example, the transport part extends from a multicopter hovering in the air or landed on the ground to a supply station installed on the ground, and agricultural materials are supplied from the supply station to the multicopter through the transport part. The supply station is a source of agricultural materials, and the scale or structure of the source is arbitrary.

"Agricultural materials" means materials consumed by agricultural work performed by the multicopter in general. The agricultural materials in embodiments of the present disclosure are granular or liquid materials. Examples of agricultural materials include liquid agents or granular agents such as herbicides or insecticides, water, fertilizers and seeds, and also include fuel consumed by internal combustion engines. Hereinafter, agricultural materials will be simply referred to as "materials".

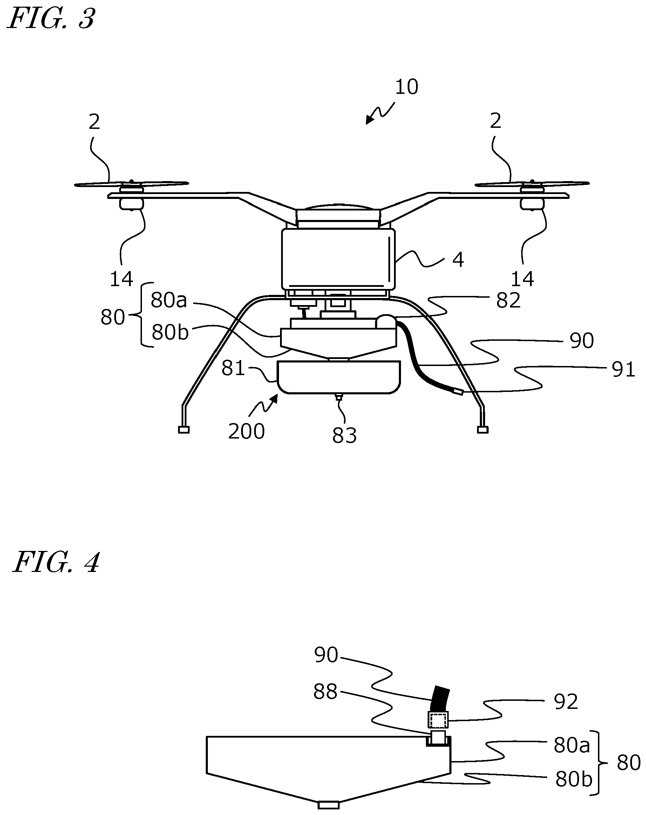

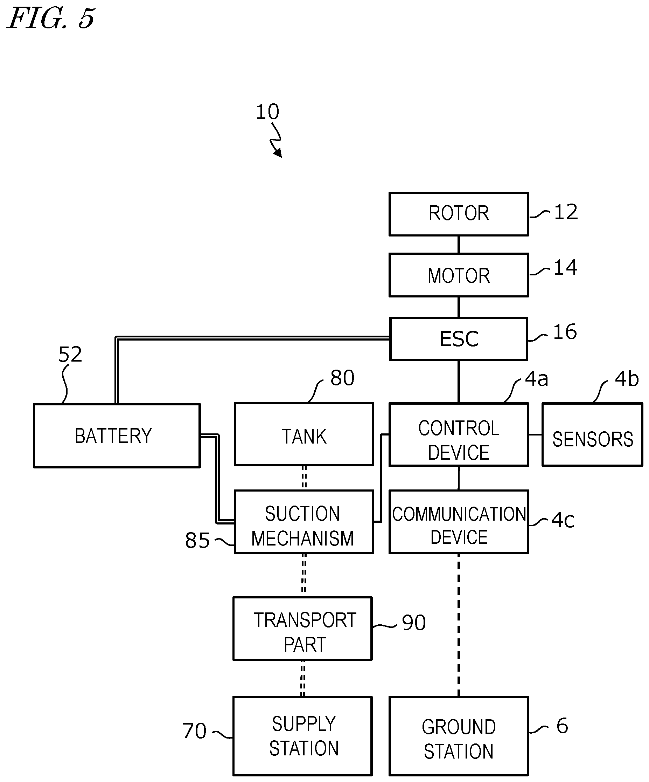

FIG. **3** is a side view schematically showing one example of a basic configuration of the multicopter **10** equipped with a tank **80** and a transport part **90.** FIG. **4** is an enlarged view of the connection part between the tank **80** and the transport part **90.** FIG. **5** is a block diagram showing a basic configuration example of the multicopter **10** equipped with the tank **80** and the transport part **90.**

The multicopter **10** illustrated in FIG. **3** includes a tank **80,** a work machine main body **81,** and a transport part **90.** The multicopter **10** may further include a housing part **82** that houses the transport part **90.** The implement **200** shown in the example in FIG. **3** is a spreader capable of dispersing materials such as liquid agents or granular agents onto a field or crops in the field. The tank **80** and the work machine main body **81** are components of the implement **200.** In other words, the implement **200** includes the tank **80** and the work machine main body **81.** The tank **80** is positioned below the main body **4.** Furthermore, the work machine main body **81** is positioned below the tank **80.** Thus, the main body **4,** tank **80,** and work machine main body **81** are arranged vertically in this order.

The tank **80** illustrated in FIG. **3** has an internal space for accommodating materials such as liquid agents or granular agents. The tank **80** includes an upper portion **80a** and a lower portion **80b.** The upper portion **80a** is the portion of tank **80** positioned on the side of the main body **4,** and the lower portion **80b** is the portion of tank **80** positioned on the side of the work machine main body **81.** The internal space may extend throughout the upper portion **80a** and the lower portion **80b.**

In the example shown in FIG. **3****,** the upper portion **80a** is generally box-shaped, and the lower portion **80b** is generally pyramid-shaped. The lower portion **80b** has a tapered shape. The cross-sectional area of the lower portion **80b** when cut parallel to a horizontal plane perpendicular to the vertical direction decreases as it approaches the side of the work machine main body **81.** The volume of the upper portion **80a** may be the same as, larger than, or smaller than the volume of the lower portion **80b.**

Since the tank **80** has a tapered shape, even if the multicopter **10** tilts during flight, materials such as liquid agents or granular agents can be kept in the lower portion **80b.** This can make it easier to discharge materials inside the tank **80** to the outside from the lower portion **80b.**

The tank **80** may be detachably supported by the main body **4.** Examples of tank structures and support mechanisms for supporting the tank by the main body are described in detail in Japanese Patent No. 6847703, of which the applicant is the patentee. The entire contents of Japanese Patent No. 6847703 are hereby incorporated by reference.

The work machine main body **81** may include a pump including an intake port and a discharge port, and a spray port **83.** Examples of the pump include motor pumps such as water pumps and vacuum pumps. For example, the intake port and discharge port of the pump are connected to the tank **80** and the spray port **83,** respectively, through piping. This allows materials contained in the tank **80** to be drawn up by the pump and sprayed from the spray port **83.**

The housing part **82** is provided on the top surface of the upper portion **80a** of the tank **80** as illustrated in FIG. **3****.** The housing part **82** may be configured to house the transport part **90** so that it is not visible from the outside. The housing part **82** may include a winding mechanism that allows the transport part **90** to be wound up or fed out. With such a housing part **82,** the transport part **90** can be housed in the housing part **82** when not in use, which may improve the aesthetics of the multicopter. It can also prevent the transport part **90** from getting entangled with the rotors or main body during flight, which would hinder flight.

The transport part **90** includes elasticity and/or flexibility. In other words, the transport part **90** may be configured to be flexible and stretchable. Examples of the transport part **90** include pipes, tubes, and hoses. At least a part of the transport part **90** may be a nozzle. In other words, the transport part **90** may include a nozzle as at least a part. In embodiments of the present disclosure, the transport part **90** includes nozzles at both ends. A supply port **91** is provided at the tip of the nozzle at one end, and a filling port **92** is provided at the tip of the nozzle at the other end. Thus, the transport part **90** includes the supply port **91** and the filling port **92** at both end portions. The transport part **90,** including the nozzle portion of the supply port **91,** may be housed in the housing part **82** so that it cannot be seen from the outside when not in use.

On the top surface of the upper portion **80a** of the tank **80,** as illustrated in FIG. **4****,** a connection part **88** is provided to connect to the transport part **90.** In the example shown in FIG. **3****,** the connection part **88** is covered by the housing part **82** and is not visible. By inserting the filling port **92** of the transport part **90** into the connection part **88,** the connection between the tank **80** and the transport part **90** is secured. Thus, the transport part **90** may be connected to the upper portion **80a** of the tank **80.** However, the connection location of the transport part **90** is not limited to the top surface of the upper portion **80a.** For example, the transport part **90** may be connected to the side surface of the upper portion **80a.** In this case, a mechanism such as a check valve is needed to prevent backflow of materials from the tank **80** to the supply port **91** side of the transport part **90.** In other words, the transport part **90** may further include a check valve.

The multicopter **10** according to embodiments of the present disclosure may further include, as shown in FIG. **5****,** a suction mechanism **85** connected between the transport part **90** and the tank **80** to draw up materials from a supply station **70** to the tank **80** through the transport part **90.** In the illustrated example, the transport part **90** directly or indirectly connects a supply station **70** to supply materials to the tank **80,** and transports materials from the supply station **70** to the tank. The supply station **70** is indirectly connected to the tank **80** through the transport part **90** via the suction mechanism **85.** However, the supply station **70** may be directly connected to the tank **80** through the transport part **90** without going through the suction mechanism **85.** Examples of the suction mechanism **85** include motor pumps such as water pumps, vacuum pumps, and fuel pumps. Specifically, if the material is a liquid agent or water, an example of the suction mechanism **85** is a water pump. If the material is a granular agent, an example of the suction mechanism **85** is a vacuum pump. If the material is fuel, an example of the suction mechanism **85** is a fuel pump. If the suction mechanism **85** is, for example, a water pump or vacuum pump, it may be provided in the work machine main body **81** as described above. If the suction mechanism **85** is a fuel pump, it may be provided in the main body **4.**

A pump, which is an example of the suction mechanism **85,** includes an intake port and a discharge port. For example, the intake port of the pump is connected to the filling port **92** of the transport part **90,** and the discharge port of the pump is connected to the tank **80** through piping. The suction mechanism **85** may operate under the control of the control device **4a.** This enables materials contained in the supply station **70** to be drawn up by the pump and filled into the tank **80** of the multicopter **10** through the transport part **90.** The suction mechanism **85** with this function may be provided in the supply station **70** rather than in the multicopter **10.**

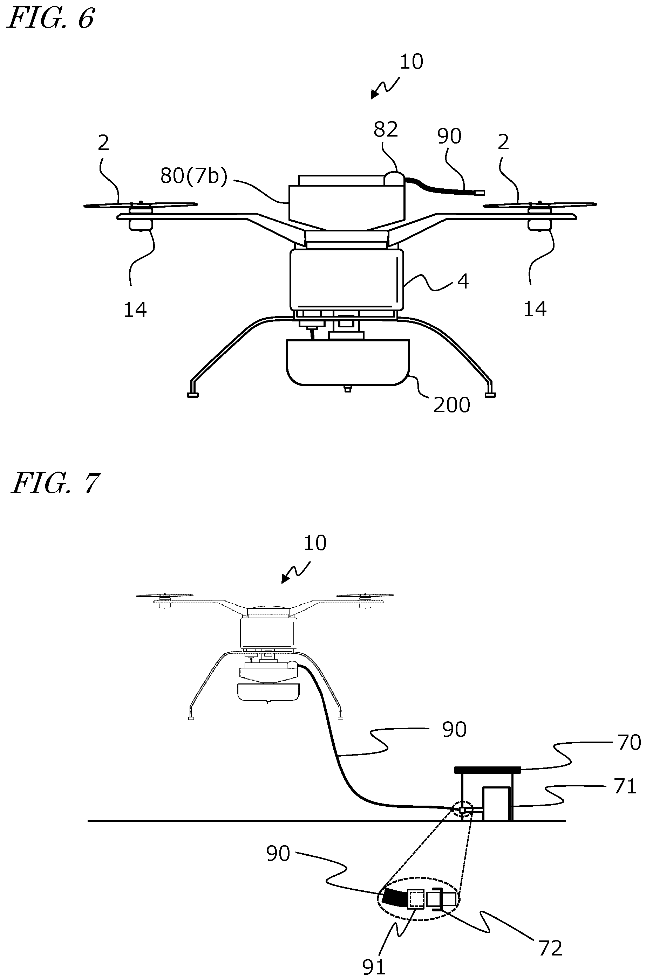

FIG. **6** is a side view schematically showing another example of a basic configuration of multicopter **10** equipped with the tank **80** and transport part **90.** The multicopter **10** illustrated in FIG. **6** differs from the multicopter **10** illustrated in FIG. **3** in that the tank **80** is located above the main body **4.** In the example shown in FIG. **6****,** the multicopter **10** includes an internal combustion engine **7a.** Specifically, the multicopter **10** includes the second rotation drive device **3B,** the third rotation drive device **3C,** or the fourth rotation drive device **3D** shown in FIG. **1A****.** When the multicopter **10** includes an internal combustion engine **7a,** the tank **80** may function as a fuel tank **7b** that accommodates fuel as the material. A fuel pump is provided in the main body **4,** and fuel is supplied from the fuel tank **7b** to the internal combustion engine **7a** by the fuel pump.

FIG. **7** is a diagram schematically showing a multicopter **10** connected to a supply station **70** by a transport part **90.** The supply station **70** includes a housing part **71** for housing materials and a connection port **72** connected to the housing part **71** through piping. The connection port **72** includes a nozzle. The supply station **70** may be installed at a specific site or may be mounted on a moving vehicle such as a truck to function as a mobile station. When the supply port **91** of the transport part **90** is inserted into the connection port **72,** the housing part **71** of the supply station **70** and the tank **80** of the multicopter **10** are connected through the transport part **90.** Materials injected from the connection port **72** to the supply port **91** are supplied to the tank **80** of the multicopter **10** through the transport part **90.** Examples of the supply station are described in detail in Patent Document 1. The entire contents of Patent Document 1 are hereby incorporated by reference.

An operator performing the material filling inserts the supply port **91** of the transport part **90** of the multicopter **10** into the connection port **72** before the material filling begins. The control device **4a** of the multicopter **10** can control the winding mechanism to feed out the transport part **90** from the winding mechanism. For example, the operator may perform remote operation from the ground using a remote device such as a laptop or tablet terminal, and send a feed-out command from the remote device to the control device **4a** of the multicopter **10.** When the multicopter **10** is hovering, the control device **4a** can pull out the transport part **90** from the housing part **82** and drop it to the ground by controlling the winding mechanism in response to that command. After the material filling is completed, the operator may again use the remote device to perform remote operation from the ground, and send a winding command from the remote device to the control device **4a** of the multicopter **10.** The control device **4a** can wind up the transport part **90** to house it in the housing part **82** by controlling the winding mechanism in response to that command.

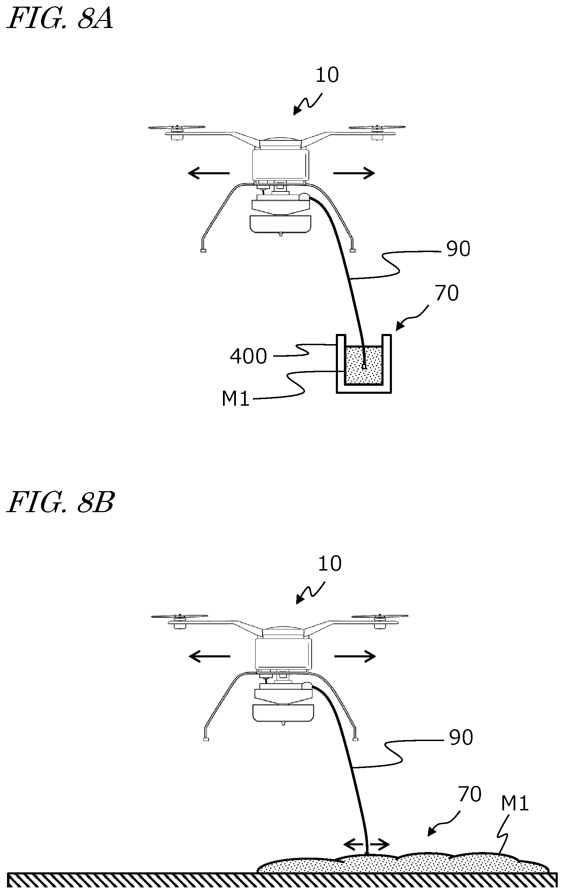

FIG. **8A** is a schematic diagram showing a multicopter **10** replenishing materials while hovering. The control device **4a** of the multicopter **10** may control the operation of the plurality of rotors to make the main body **4** (or the multicopter **10)** hover when replenishing materials. As shown in FIG. **8A****,** when the multicopter **10** is replenishing material **M1** contained in a container **400,** the control device **4a** may control the flight of the main body **4** to approach the vicinity of the supply station **70.** When the multicopter **10** reaches the vicinity of the supply station **70,** the control device **4a** controls the attitude and position of the main body **4** so that the tip end of the transport part **90** (the supply port **91** shown in FIG. **3****)** enters the container **400.** When the tip end of the transport part **90** enters the container **400,** the control device **4a** activates the suction mechanism **85** and starts sucking material **M1** from inside the container **400.** During the suction of material **M1** by the suction mechanism **85,** the control device **4a** maintains the attitude of the multicopter **10** by controlling the operation of the plurality of rotors to continue hovering the main body **4.**

The position information of the location of the supply station **70** may be obtained from one or more servers (computers) or terminal devices (including portable and fixed types) connected to the communication device **4c,** or it may be obtained from map data stored in a storage device **37** to be described later. The determination of whether the main body **4** (or the multicopter **10)** has reached the supply station **70** can be made based on the result of positioning by a positioning device such as a GNSS receiver. For example, the control device **4a** refers to the position information obtained by the positioning device and the position information of the supply station **70,** and determines that the main body **4** has reached the supply station **70** if the distance between the main body **4** and the supply station **70** is within a predetermined range. On the other hand, if the distance between them is outside the predetermined range, the control device **4a** determines that the main body **4** has not reached the supply station **70.** Alternatively, the control device **4a** may compare the environmental information indicated by sensing data obtained from sensing devices such as imaging devices or laser sensors that sense the surroundings of the main body **4** with the environmental information of the supply station **70** stored in the storage device **37,** and determine whether it has reached the supply station **70** by matching the two. In such an example, the positioning device or sensing device is mounted on the main body **4.**

With such control, the multicopter **10** can smoothly perform replenishment using the transport part **90** by maintaining the attitude of the multicopter **10** during replenishment.

Alternatively, if at least a part of the transport part **90** is a nozzle, the control device **4a** may control the operation of the plurality of rotors so that the nozzle is positioned near the material to be supplied when supplying material **M1** to the tank **80.**

FIG. **8B** is a schematic diagram showing another way the multicopter **10** replenishes materials while hovering. In the example shown in FIG. **8B****,** the material **M1** is placed on the ground. A source of materials in such a state is also an example of a supply station **70.** Similar to FIG. **8A****,** the control device **4a** controls the flight of the main body **4** to make the multicopter **10** approach the vicinity of the supply station **70.** When the multicopter **10** reaches the vicinity of the supply station **70,** the control device **4a** brings the tip end of the nozzle (the supply port **91** shown in FIG. **3****)** close to the material **M1.** The control device **4a** activates the suction mechanism **85** and draws up the material **M1** from inside the container **400.** During the suction of material **M1** by the suction mechanism **85,** the control device **4a** controls the operation of the plurality of rotors so that the main body **4** (or the multicopter **10)** is positioned near the material **M1.** For example, the control device **4a** obtains the positional relationship between the tip of the nozzle and the material **M1** based on sensing data acquired by the sensing device. The control device **4a** may control the height, position, and attitude of the main body **4** so that the tip of the nozzle is positioned near the material **M1** based on the obtained positional relationship.

With such control, the multicopter **10** can bring the supply port **91** of the transport part **90** close to the material and smoothly perform replenishment.

The multicopters according to embodiments of the present disclosure is not limited to a quad-type multicopter but may be, for example, a hexa-type multicopter (hexacopter) equipped with six rotors, or an octo-type multicopter (octocopter) equipped with eight rotors. The control device **4a** described above may be programmed to enable autonomous flight of the multicopter. In that case, the multicopter is capable of flying autonomously along a pre-determined flight path.

According to the multicopter of embodiments of the present disclosure, it is possible to pull out the transport part from the housing part and connect it to the supply station only when filling or replenishing materials to the tank included in the multicopter is necessary. When filling or replenishing materials is not necessary, the transport part can be housed in the housing part to prevent the transport part from hindering flight, and furthermore, the aesthetics of the multicopter may be improved. In this way, it becomes possible to smoothly fill or replenish liquid agents such as herbicides or insecticides, and fuels from the supply station to the multicopter.

The control device **4a** in embodiments of the present disclosure may be implemented by a digital computer system programmed to execute the processes described above.

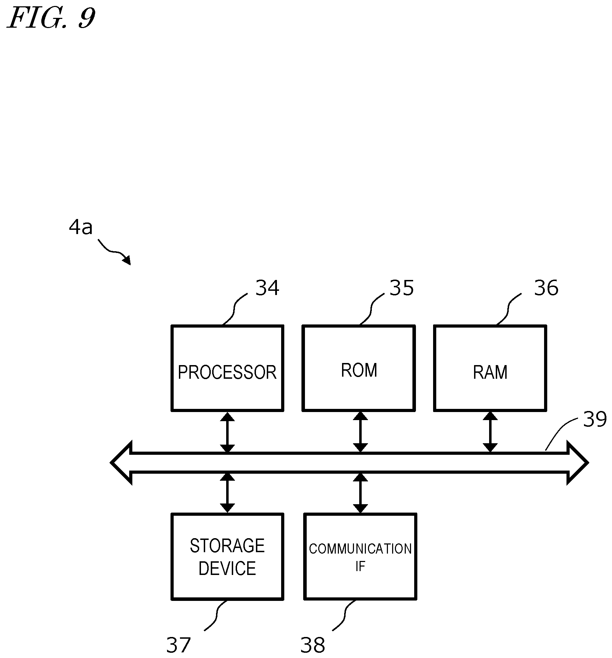

FIG. **9** is a block diagram showing an example of hardware configuration of the control device **4a.** The control device **4a** includes a processor **34,** a ROM (Read Only Memory) **35,** a RAM (Random Access Memory) **36,** a storage device **37,** and a communication I/F **38.** These components are interconnected via a bus **39.** The bus **39** is, for example, a CAN (Controller Area Network) bus.

The processor **34** is a device including one or more semiconductor integrated circuits (e.g., processors). The processor is also referred to as a central processing unit (CPU) or microprocessor. The processor sequentially executes computer programs stored in the ROM **35** to implement the aforementioned processes. The term processor is broadly interpreted to encompass devices such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (e.g., PROM), rewritable memory (e.g., flash memory), or read-only memory. The ROM **35** stores programs to control the operation of the processor. The ROM **35** need not be a single recording medium but may be a collection of multiple recording media. Some parts of the collection may be removable memory.

The RAM **36** provides a work area for temporarily expanding programs stored in the ROM **35** during boot-up. The RAM **36** need not be a single recording medium but may be a collection of multiple recording media.

The communication I/F **38** is an interface for communication between the control device **4a** and other electronic components or electronic control units (ECUs). For example, the communication I/F **38** may perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** flight path data, and various sensor data acquired by the multicopter **10** during flight.

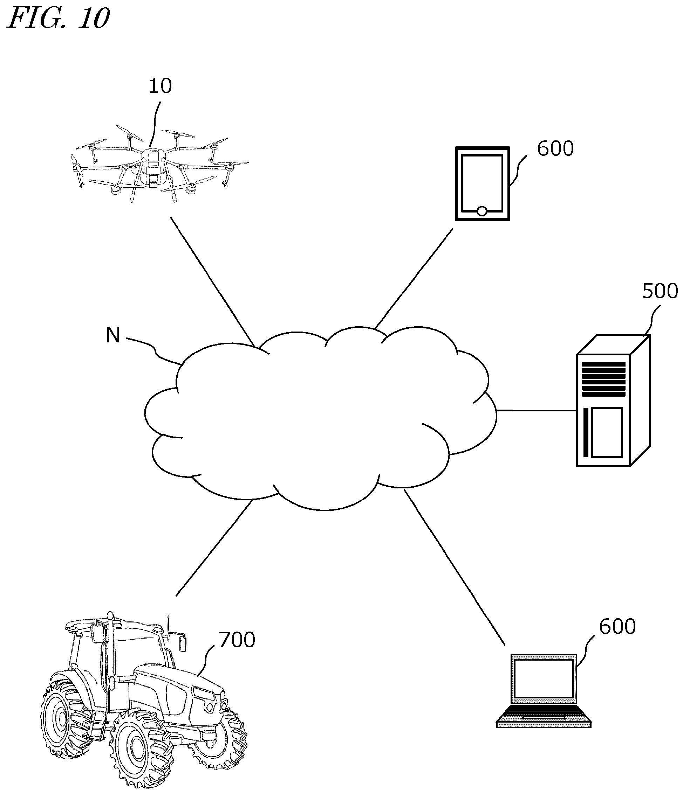

Note that, as mentioned earlier, the control device **4a** may include, for example, a flight control device such as a flight controller and a higher-level computer (companion computer). The companion computer may execute the processes for implementing material replenishment described with reference to FIG. **8A** or FIG. **8B****,** and provide flight-related commands to the flight controller based on the results of those processes. Additionally, some or all of the functions of electronic equipment such as the control device **4a** or companion computer mounted on the multicopter **10** may be implemented by one or more servers (computers) **500** or terminal devices (including portable and fixed types) **600** connected to the communication device **4c** of the multicopter **10** via a communication network **N,** as shown in FIG. **10****.** An agricultural machine **700** such as a tractor may be connected to this communication network **N,** and communication may be performed between the multicopter **10** and the agricultural machine **700.** Through the communication network **N,** portion of the data used for processing by the control device **4a** and control signals for the multicopter **10** may be provided to the multicopter **10** from the agricultural machine **700.**

Systems providing various functions in the embodiments can also be attached later to multicopters that do not have those functions. Such systems may be manufactured and sold independently of the multicopter. Computer programs used in such systems may also be manufactured and sold independently of the multicopter. Computer programs may be provided, for example, stored on a non-transitory computer-readable storage medium. Computer programs may also be provided through downloads via telecommunications lines (e.g., the Internet).

This description discloses the solutions described in the following items.

### [Item 1]

An unmanned aerial vehicle comprising a plurality of rotors, the unmanned aerial vehicle comprising:
a main body supporting the plurality of rotors;
a tank that accommodates agricultural materials; and
a transport part provided on the tank to transport the agricultural materials toward the tank,
wherein the transport part has elasticity and/or flexibility.

### [Item 2]

The unmanned aerial vehicle according to Item 1, wherein:
the tank includes an upper portion and a lower portion;
the lower portion has a tapered shape; and
the transport part is connected to the upper portion.

### [Item 3]

The unmanned aerial vehicle according to Item 1 or 2,
wherein the tank is provided above or below the main body.

### [Item 4]

The unmanned aerial vehicle according to any one of Items 1 to 3, further comprising a suction mechanism connected between the transport part and the tank to draw up the agricultural materials from the supply station to the tank through the transport part.

### [Item 5]

The unmanned aerial vehicle according to any one of Items 1 to 4, wherein at least a portion of the transport part is a nozzle.

### [Item 6]

The unmanned aerial vehicle according to any one of Items 1 to 5, further comprising a housing part that houses the transport part so that the transport part it is not visible from the outside.

### [Item 7]

The unmanned aerial vehicle according to any one of Items 1 to 6, further comprising a control device to control the operation of the plurality of rotors; wherein
when the transport part is transporting the agricultural materials toward the tank, the control device controls the operation of the plurality of rotors so that the main body hovers.

### [Item 8]

The unmanned aerial vehicle according to any one of Items 1 to 4, further comprising a control device to control the operation of the plurality of rotors, wherein:
at least a portion of the transport part is a nozzle, and
when supplying the agricultural materials to the tank, the control device controls the operation of the plurality of rotors so that the nozzle is positioned near the agricultural materials to be supplied.

### INDUSTRIAL APPLICABILITY

The unmanned aerial vehicle according to the present disclosure may be widely utilized not only for aerial photography, surveying, logistics, and agricultural spraying applications but also for ground work related to agriculture, transportation of harvested crops and agricultural materials.

### REFERENCE SIGNS LIST

**2**...rotor (propeller), **3**...rotation drive device, **4**...main body, **4a**...control device, **4b**...sensors, **4c**...communication device, **5**...body frame, **6**...ground station, **7a**...internal combustion engine, **7b**...fuel tank, **8**...electric generator, **9**...power buffer, **10**...multicopter, **12, 22**...rotor, **14**...motor, **16**...ESC, **70**...supply station, **76**...power supply, **80**...tank, **81**...work machine main body, **82**...housing part, **85**...suction mechanism, **90**...transport part, **200**...work machine

## Claims

1. An unmanned aerial vehicle comprising a plurality of rotors, the unmanned aerial vehicle comprising:
a main body supporting the plurality of rotors;
a tank that accommodates agricultural materials; and
a transport part provided on the tank to transport the agricultural materials toward the tank,
wherein the transport part has elasticity and/or flexibility.

2. The unmanned aerial vehicle according to Claim 1, wherein:
the tank includes an upper portion and a lower portion;
the lower portion has a tapered shape; and
the transport part is connected to the upper portion.

3. The unmanned aerial vehicle according to Claim 1 or 2, wherein the tank is provided above or below the main body.

4. The unmanned aerial vehicle according to any one of Claims 1 to 3, further comprising a suction mechanism connected between the transport part and the tank to draw up the agricultural materials from the supply station to the tank through the transport part.

5. The unmanned aerial vehicle according to any one of Claims 1 to 4, wherein at least a portion of the transport part is a nozzle.

6. The unmanned aerial vehicle according to any one of Claims 1 to 5, further comprising a housing part that houses the transport part so that the transport part is not visible from the outside.

7. The unmanned aerial vehicle according to any one of Claims 1 to 6, further comprising a control device to control the operation of the plurality of rotors; wherein
when the transport part is transporting the agricultural materials toward the tank, the control device controls the operation of the plurality of rotors so that the main body hovers.

8. The unmanned aerial vehicle according to any one of Claims 1 to 4, further comprising: a control device to control the operation of the plurality of rotors, wherein:
at least a portion of the transport part is a nozzle, and
when supplying the agricultural materials to the tank, the control device controls the operation of the plurality of rotors so that the nozzle is positioned near the agricultural materials to be supplied.
